# EUROPÄISCHE PATENTANMELDUNG

(11) **EP 1 908 545 A2**
(43) Veröffentlichungstag der Anmeldung: **09.04.2008**
(21) Anmeldenummer: 07019307.3
(22) Anmeldetag: 02.10.2007
(51) Int. Cl.: B23K 26/12, F16L 41/04

(54) **Kanalwand**

(30) Priorität: 04.10.2006 DE 102006047240
(71) Anmelder: MEMA Maschinen- und Apparateschutz GmbH, 63500 Seligenstadt (DE)
(72) Erfinder: Willand, Thorsten, 64832 Babenhausen (DE)
(74) Vertreter: Schumacher, Bernd

(57) **Zusammenfassung**

Die Erfindung betrifft eine Kanalwand mit einer flächigen Kanalabdeckung und einer in deren Längsrichtung beweglichen Durchführungsöffnung zum Durchführen eines Mediums aus einem von der Kanalwand abgedeckten Kanal, insbesondere zum Durchführen eines Laserstrahls einer Laserstrahl-Bearbeitungsmaschine.

Um eine Kanalwand der genannten Art so auszubilden, daß bei einfachem sowie preiswertem Gesamtaufbau nur sehr geringe Massen bewegt werden und somit sehr große Arbeitsgeschwindigkeiten erzielbar sind, wird erfindungsgemäß vorgeschlagen, daß die Kanalabdeckung aus einem an ihren Längsseiten fest mit dem Kanal zu verbindenden flexiblen Material besteht, daß die Kanalabdeckung zwischen ihren Längsseiten eine Trennlinie aufweist, an der einander benachbarte Ränder der Kanalabdeckung durch leistenförmige, biegsame, ineinandergreifende Nut- und Federglieder lösbar miteinander verbunden sind, und daß ein an der Trennlinie in Längsrichtung derselben hin- und hergehend bewegbares Durchführungsglied die Durchführungsöffnung für das Medium aufweist und mit den Nut- und Federgliedern so in gleitendem Führungseingriff steht, daß diese in Bewegungsrichtung des Durchführungsgliedes vor der Durchführungsöffnung unter Freigabe derselben quer zur Bewegungsrichtung wandöffnend auseinandergezogen sowie hinter derselben wieder wandschließend zusammengeführt werden.

## Beschreibung

Die Erfindung betrifft eine Kanalwand mit einer flächigen Kanalabdeckung und einer in deren Längsrichtung beweglichen Durchführungsöffnung zum Durchführen eines Mediums aus einem von der Kanalwand abgedeckten Kanal, insbesondere zum Durchführen eines Laserstrahls einer Laserstrahl-Bearbeitungsmaschine.

Derartige Kanalwände kommen beispielsweise bei Laserstrahl-Bearbeitungsmaschinen zum Einsatz. Hierbei wird ein in Längsrichtung des Kanals verlaufender empfindlicher Laserstrahl, der vor Staub und Verunreinigungen zu schützen ist, über einen mit einem Maschinenschlitten verbundenen Umlenkspiegel über die bewegliche Durchführungsöffnung seitlich aus dem Kanal herausgeleitet. Die Durchführungsöffnung wird in bekannter Weise mit geteilten bzw. aneinandergereihten normalen Faltenbälgen, Scheibenfaltenbälgen oder mit einem umlaufenden Lochblendenband erzielt. Diese Mechanismen sind aufwendig und insbesondere auch unter Berücksichtigung der großen Arbeitsgeschwindigkeiten von beispielsweise 300 Metern pro Minute und der relativ großen bewegten Massen träge und anfällig.

Der vorliegenden Erfindung liegt deshalb die Aufgabe zugrunde, eine Kanalwand der genannten Art so auszubilden, daß bei einfachem sowie preiswertem Gesamtaufbau nur sehr geringe Massen bewegt werden und dadurch sehr große Arbeitsgeschwindigkeiten erzielbar sind.

Zur Lösung der gestellten Aufgabe zeichnet sich eine Kanalwand der oben bzw. im Oberbegriff von Anspruch 1 genannten Art erfindungsgemäß durch im Kennzeichen von Anspruch 1 aufgeführten Merkmale aus, nämlich dadurch, daß die Kanalabdekkung aus einem an ihren Längsseiten fest mit dem Kanal zu verbindenden flexiblen Material besteht, daß die Kanalabdeckung zwischen ihren Längsseiten eine Trennlinie aufweist, an der einander benachbarte Ränder der Kanalabdeckung durch leistenförmige, biegsame, ineinandergreifende Nut- und Federglieder lösbar miteinander verbunden sind, und daß ein an der Trennlinie in Längsrichtung derselben hin- und hergehend bewegbares Durchführungsglied die Durchführungsöffnung für das Medium aufweist und mit den Nut- und Federgliedern so in gleitendem Führungseingriff steht, daß diese in Bewegungsrichtung des Durchführungsgliedes vor der Durchführungsöffnung unter Freigabe derselben quer zur Bewegungsrichtung wandöffnend auseinandergezogen sowie hinter derselben wieder wandschließend zusammengeführt werden.

Dadurch ergibt sich der wesentliche Vorteil, daß die an sich stationäre flexible Kanalwand vom Durchführungsglied stets nur im erforderlichen Umfang bereichsweise geöffnet wird. Somit werden nur die sehr kleinen Massen des Durchführungsgliedes selbst und der jeweils direkt angrenzenden Abschnitte der flexiblen Kanalabdeckung bewegt, so daß sich äußerst große Arbeitsgeschwindigkeiten erzielen lassen. Die Kanalwand läßt sich ferner einfach und preiswert herstellen.

Die weiteren Ausgestaltungen der Ansprüche 2 bis 4 ermöglichen einen relativ festen Zusammenhalt der beiden trennbaren Abschnitte der Kanalabdeckung. Dieser relativ feste und dennoch problemfrei lösbare Verschluß kann beispielsweise dann besonders vorteilhaft sein, wenn der Kanal unter einem bestimmten Überdruck mit einem Gas, wie Stickstoff, gespült wird, um diesen schmutzpartikelfrei zu halten.

Die besonders bevorzugten weiteren Merkmale der Ansprüche 5 bis 7 erlauben ein gleichmäßiges schonendes Öffnen und Schließen der Kanalabdeckung durch allmähliches Spreizen und Zusammenführen der Nut- und Federglieder. Das ermöglicht einen ruhigen Betriebsablauf auch bei sehr großen Arbeitsgeschwindigkeiten.

Durch die Maßnahmen der Ansprüche 8 und 9 ergibt sich ein besonders gewichtsleichtes und einfach manipulierbares Durchführungsglied.

Die Nut- und Federglieder können gemäß Anspruch 10 an den Abschnitten der Kanalabdeckung fest oder lösbar gehalten sein. Bei lösbarer Anbringung können sie als Verschleißglieder kostensparend ausgetauscht werden.

Gemäß den Ansprüchen 11 und 12 kann die Kanalwand vorzüglich bei einer Laserstrahl-Bearbeitungsmaschine eingesetzt werden, indem das Durchführungsglied und über dieses auch ein hiermit verbundener Umlenkspiegel antriebsmäßig maschinenseitig angeschlossen wird.

Nach Anspruch 13 können für die Kanalabdeckung je nach Einsatzgebiet verschiedene flexible Materialien eingesetzt werden.

Die Erfindung wird nachfolgend an zeichnerisch dargestellten Ausführungsbeispielen näher erläutert. Es zeigen:
- Fig. 1: eine in einen Kanal eingebaute Kanalwand nach der vorliegenden Erfindung in einer vereinfachten geschnittenen Perspektive,
- Fig. 2: ein Detail A aus Fig. 1 in einem vergrößerten Teilschnitt,
- Fig. 3: einen Teil der Kanalwand mit einem Durchführungsglied derselben in einer vereinfachten Einzelansicht,
- Fig. 4: einen vergrößerten Schnitt in einer Schnittansicht A-A aus Fig. 3 und
- Fig. 5: das geöffnete Durchführungsglied der Kanalwand in einer vergrößerten Schnittansicht B-B aus Fig. 3.

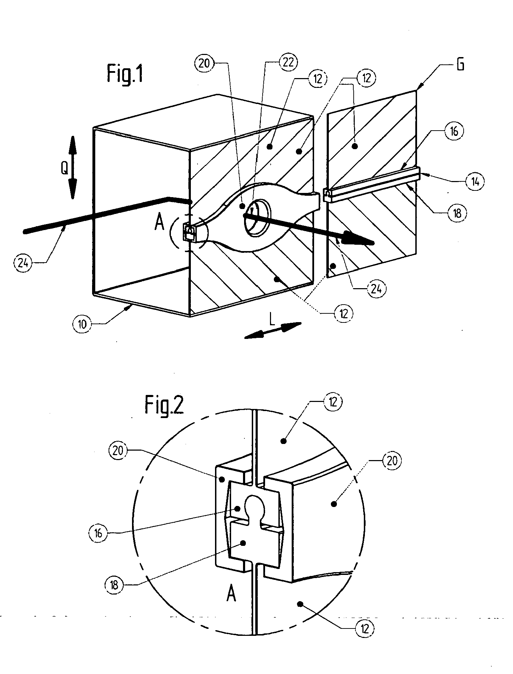

Gemäß den Figuren 1 bis 5 besteht ein Kanal 10 im vorliegenden Fall aus einem U-Profil, das an seiner offenen Seite durch eine besondere Kanalwand in Form einer flexiblen Kanalabdeckung 12 abgedeckt ist. Die an beiden Längsrändern mit dem U-Profil des Kanals 10 verbundene Kanalabdeckung 12 ist an einer mittleren Trennlinie 14 geteilt und besteht beispielsweise aus bandförmigem Gummi bzw. Kunststoff oder aber aus einem Faltenmaterial mit in Längsrichtung L der Kanalabdeckung verlaufenden Falten. An den einander benachbarten Rändern der beiden Abschnitte der Kanalabdeckung 12 sind leistenförmige Glieder angeordnet, die nach dem Nut-Feder-Prinzip in einen lösbaren Eingriff gebracht werden können. Im vorliegenden Fall ist am oberen Abschnitt ein Nutglied 16 ausgebildet oder angebracht, während am unteren Abschnitt ein hiermit in Eingriff bringbares Federglied 18 ausgebildet oder angebracht ist.

Ein in Längsrichtung L hin- und herbewegbares Durchführungsglied 20 mit einer Durchführungsöffnung 22, beispielsweise für einen im Kanal 10 umgelenkten Laserstrahl 24, umgreift und führt die Nut- und Federglieder 16, 18 so, daß diese im Bereich des Durchführungsgliedes hiervon in Querrichtung Q öffnend gespreizt und wieder schließend zusammengeführt werden. Hierzu dienen leicht gekrümmte, randseitige, innere Führungsbahnen 26 des Durchführungsgliedes 20, die die Nut- und Federglieder 16, 18 entsprechend um die Durchführungsöffnung 22 führen. An den Enden des Durchführungsgliedes 20 bzw. sorgen spitze Keile 28 der Führungsbahnen 26 dafür, daß die Nut- und Federglieder 16, 18 eingangsseitig öffnend auseinander gezogen und ausgangsseitig wieder schließend zusammengedrückt werden. In die Führungsbahnen 26 mündende äußere Schlitze 30 des Durchführungsgliedes 20 ermöglichen einen freien Durchgriff der mit den Nut- und Federgliedern 16, 18 verbundenen flexiblen Kanalabdeckung 12.

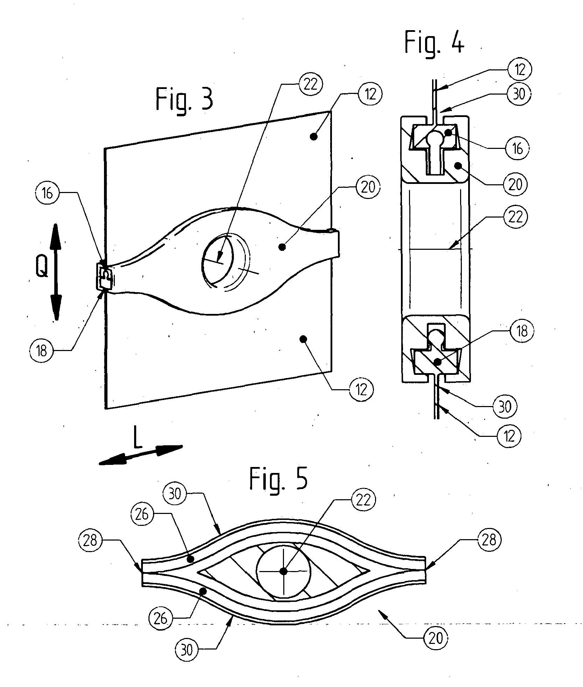

Das beispielsweise aus leichtem Kunststoff bestehende Durchführungsglied 20 kann zweiteilig mit einer Trennung in der Q-L Ebene ausgebildet sein. In seinem gemäß Fig. 5 geöffneten Zustand sind die Führungsbahnen 26 frei zugänglich, so daß die Nut- und Federglieder 16, 18 eingelegt oder herausgenommen werden. In seinem geschlossenen Zustand sind die Führungsbahnen 26 gemäß Fig. 1 durch ein Deckelelement (fehlt in Fig. 5) verschlossen. Diese beiden Teile des Durchführungsgliedes 20 werden in dessem zentralen Bereich lösbar zusammengehalten, beispielsweise durch Verrasten oder Verklemmen.

## Patentansprüche

1. Kanalwand mit einer flächigen Kanalabdeckung (12) und einer in deren Längsrichtung beweglichen Durchführungsöffnung (22) zum Durchführen eines Mediums (24) aus einem von der Kanalwand abgedeckten Kanal (10), insbesondere zum Durchführen eines Laserstrahls einer Laserstrahl-Bearbeitungsmaschine,
**dadurch gekennzeichnet,**
**daß** die Kanalabdeckung (12) aus einem an ihren Längsseiten fest mit dem Kanal zu verbindenden flexiblen Material besteht,
**daß** die Kanalabdeckung (12) zwischen ihren Längsseiten eine Trennlinie (14) aufweist, an der einander benachbarte Ränder der Kanalabdeckung durch leistenförmige, biegsame, ineinandergreifende Nut- und Federglieder (16, 18) lösbar miteinander verbunden sind,
und **daß** ein an der Trennlinie (14) in Längsrichtung (L) derselben hin- und hergehend bewegbares Durchführungsglied (20) die Durchführungsöffnung (22) für das Medium aufweist und mit den Nut- und Federgliedern (16, 18) so in gleitendem Führungseingriff steht, daß diese in Bewegungsrichtung des Durchführungsgliedes vor der Durchführungsöffnung unter Freigabe derselben quer zur Bewegungsrichtung wandöffnend auseinandergezogen sowie hinter derselben wieder wandschließend zusammengeführt werden.

2. Kanalwand nach Anspruch 1, **dadurch gekennzeichnet, daß** die Nut- und Federglieder (16, 18) unter gegenseitigem Klemmeingriff ineinandergreifen.

3. Kanalwand nach Anspruch 1 oder 2, **dadurch gekennzeichnet, daß** das Federglied (18) einen abgerundeten verdickten Federkopf aufweist.

4. Kanalwand nach einem der Ansprüche 1 bis 3, **dadurch gekennzeichnet, daß** das Nutglied (16) eine sich nach innen erweiternde Nut aufweist.

5. Kanalwand nach einem der Ansprüche 1 bis 4, **dadurch gekennzeichnet, daß** das Durchführungsglied (20) gleichmäßig leicht gekrümmte randseitige Führungskanäle (26) zum öffnenden und schließenden Führen der Nut- und Federglieder (16, 18) aufweist.

6. Kanalwand nach einem der Ansprüche 1 bis 5, **dadurch gekennzeichnet, daß** das Durchführungsglied (20) mit seinen Führungskanälen (26) die Nut- und Federglieder (16,18) allseitig umgibt und über seine Länge verlaufende, die Bandränder durchlassende äußere Schlitze (30) aufweist.

7. Kanalwand nach einem der Ansprüche 1 bis 6, **dadurch gekennzeichnet, daß** das Durchführungsglied (20) an den Enden der Führungsbahnen (26) befindliche spitze Keile (28) aufweist, die am in Bewegungsrichtung vorderen Ende der Führungsbahnen öffnend bzw. spreizend zwischen die Nut- und Federglieder (16, 18) greifen und am in Bewegungsrichtung hinteren Ende der Führungsbahnen ein schließendes Zusammenführen der Nut- und Federglieder zulassen.

8. Kanalwand nach einem der Ansprüche 1 bis 7, **dadurch gekennzeichnet, daß** das Durchführungsglied (20) zumindest zweiteilig ausgebildet ist und im geöffneten Zustand seine Führungsbahnen (26) freigibt.

9. Kanalwand nach einem der Ansprüche 1 bis 8, **dadurch gekennzeichnet, daß** das Durchführungsglied (20) und/oder die Nut- und Federglieder (16, 18) aus Kunststoff bestehen.

10. Kanalwand nach einem der Ansprüche 1 bis 9, **dadurch gekennzeichnet, daß** die biegsamen leistenförmigen Nut- und Federglieder (16, 18) an den Rändern der flexiblen Kanalabdeckung (12) fest oder lösbar angebracht oder hiermit einstückig ausgebildet sind.

11. Kanalwand **dadurch gekennzeichnet** nach einem der Ansprüche 1 bis 10, daß das Durchführungsglied (20) maschinenseitig antriebsmäßig angeschlossen ist, wie mit einem bewegten Schlitten einer Laserstrahl-Bearbeitungsmaschine verbunden ist.

12. Kanalwand nach Anspruch 11, **dadurch gekennzeichnet, daß** das Durchführungsglied (20) mit einem Umlenkspiegel zum Umlenken eines Laserstrahls (24) aus dem von der Kanalabdeckung (12) abgedeckten Kanal (10) durch die Durchführungsöffnung (22) fest verbunden ist.

13. Kanalwand nach einem der Ansprüche 1 bis 12, **dadurch gekennzeichnet, daß** die Kanalabdeckung (12) aus einem dichten sowie widerstandsfähigen Material besteht, wie aus Gummi, Kunststoff oder einem Faltenmaterial mit in Längsrichtung (L) der Kanalabdeckung verlaufenden Falten.
